# EUROPÄISCHE PATENTSCHRIFT

(11) **EP 3 177 504 B1**
(45) Veröffentlichungstag und Bekanntmachung des Hinweises auf die Patenterteilung: **05.12.2018**
(21) Anmeldenummer: 15752967.8
(22) Anmeldetag: 04.08.2015
(51) Int. Cl.: B62D 15/02, B60W 30/08, G08G 1/16, B60W 30/06, B60W 30/09, G05D 1/02

(54) **VERFAHREN ZUM ZUMINDEST SEMI-AUTONOMEN MANÖVRIEREN EINES KRAFTFAHRZEUGS, FAHRERASSISTENZSYSTEM SOWIE KRAFTFAHRZEUG**
METHOD FOR THE AT LEAST SEMI-AUTONOMOUS MANOEUVRING OF A MOTOR VEHICLE, DRIVER ASSISTANCE SYSTEM AND MOTOR VEHICLE
PROCÉDÉ SERVANT À MANOEUVRER AU MOINS DE MANIÈRE SEMI-AUTONOME UN VÉHICULE AUTOMOBILE, SYSTÈME D'ASSISTANCE AU CONDUCTEUR AINSI QUE VÉHICULE AUTOMOBILE

(30) Priorität: 05.08.2014 DE 102014111122
(43) Veröffentlichungstag der Anmeldung: 14.06.2017
(73) Patentinhaber: Valeo Schalter und Sensoren GmbH, 74321 Bietigheim-Bissingen (DE)
(72) Erfinder: BARIANT, Jean-Francois, 74321 Bietigheim-Bissingen (DE); WAGEMANN, Nicole, 74321 Bietigheim-Bissingen (DE)
(86) Internationale Anmeldenummer: PCT/EP2015/067891
(87) Internationale Veröffentlichungsnummer: WO 2016/020355

(56) Entgegenhaltungen:
- DE-A1-102010 002 105
- DE-A1-102011 077 388
- DE-A1-102012 014 207
- DE-A1-102012 213 899
- US-A1- 2013 335 553

## Beschreibung

Die vorliegende Erfindung betrifft ein Verfahren zum zumindest semi-autonomen Manövrieren eines Kraftfahrzeugs, bei welchem eine relative Lage zwischen dem Kraftfahrzeug und zumindest einem Objekt in einem Umgebungsbereich des Kraftfahrzeugs mittels einer Sensoreinrichtung des Kraftfahrzeugs ermittelt wird, anhand der ermittelten relativen Lage eine Fahrtrajektorie für eine Fahrt des Kraftfahrzeugs an dem zumindest einen Objekt vorbei bestimmt wird und ein Kollisionsabstand, welcher einen Abstand zwischen dem Kraftfahrzeug und dem zumindest einen Objekt bei der Fahrt entlang der bestimmten Fahrtrajektorie beschreibt, bestimmt wird. Die Erfindung betrifft außerdem ein Fahrerassistenzsystem sowie ein Kraftfahrzeug mit einem solchen Fahrerassistenzsystem.

Das Interesse richtet sich vorliegend insbesondere auf Fahrerassistenzsysteme, welche den Fahrer beim Manövrieren des Kraftfahrzeugs und insbesondere beim Einparken des Kraftfahrzeugs in eine Parklücke unterstützen. Aus dem Stand der Technik sind bereits Fahrerassistenzsysteme bekannt, welche mit Hilfe von entsprechenden Sensoren Parklücken bzw. freie Stellplätze erkennen können und den Fahrer beim Einparkvorgang unterstützen. Dabei kann der Fahrer sowohl beim Längsparken als auch beim Querparken unterstützt werden. Darüber hinaus sind Fahrerassistenzsysteme bekannt, die das Kraftfahrzeug bei einem Einparkvorgang semi-autonom manövrieren. Hierbei übernimmt das Fahrerassistenzsystem die Lenkung des Kraftfahrzeugs und der Fahrer betätigt das Gaspedal und die Bremse. Ferner sind bereits Fahrerassistenzsysteme bekannt, die ein autonomes Manövrieren des Kraftfahrzeugs ermöglichen.

Hierzu offenbart die DE 10 2011 086 210 A1 ein Verfahren zur Unterstützung eines Fahrers eines Kraftfahrzeugs bei einem Fahrmanöver mit Bestimmung eines Fahrschlauchs, in dem sich das Kraftfahrzeug während der Durchführung des Fahrmanövers bewegt, wobei das Fahrmanöver automatisch oder semi-automatisch durchgeführt wird. Falls sich ein Objekt innerhalb des Fahrschlauchs befindet, wird das Fahrzeug angehalten. Das Fahrmanöver wird fortgesetzt, sobald das Objekt den Fahrschlauch verlassen hat. Das Verfahren kann beispielsweise zum Einparken des Kraftfahrzeugs verwendet werden.

Des Weiteren beschreibt die DE 10 2010 023 164 A1 ein Verfahren zum Warnen eines Fahrers eines Kraftfahrzeugs vor der Anwesenheit eines Objektes in einer Umgebung des Kraftfahrzeugs mithilfe eines Fahrerassistenzsystems des Kraftfahrzeugs. Hierbei wird eine relative Position des Objekts bezüglich des Kraftfahrzeugs anhand von Daten einer Sensoreinrichtung bestimmt. Des Weiteren wird eine voraussichtliche Fahrbahn bzw. ein voraussichtlicher Fahrschlauch des Kraftfahrzeugs ermittelt. Das Verfahren kann beispielsweise beim Einparken in eine Parklücke angewandt werden.
Darüber hinaus beschreibt die DE 10 2008 027 779 A1 ein Verfahren zur Unterstützung eines Fahrers eines Fahrzeugs beim Einparken in eine Parklücke. Hierbei wird eine mögliche Parklücke vermessen und es wird eine Einparktrajektorie berechnet. Die Parklückengeometrie wird während des Einparkvorgangs weiterhin ermittelt und mit der vor Beginn des Einparkvorgangs ermittelten Parklückengeometrie verglichen. Wenn sich die beiden Parklückengeometrien voneinander unterscheiden, wird eine vorliegende Abweichung bewertet und die Einparktrajektorie gegebenenfalls korrigiert und/oder neu berechnet.
Ferner ist aus der DE 10 2009 040 373 A1 ein Verfahren zum Durchführen eines zumindest semi-autonomen Parkvorgangs eines Fahrzeugs bekannt. Hierbei wird vor dem Einleiten des Parkvorgangs eine potentielle Parklücke durch eine Sensoreinrichtung eines Parkassistenzsystems erfasst und eine durch das Fahrzeug während des Parkvorgangs zum Erreichen einer Endposition in der Parklücke zu befahrene Parkbahn wird abhängig von der erfassten Parklücke bestimmt. Zudem wird nach Einleiten des Parkvorgangs jeweils eine Entfernung des Fahrzeugs von den Objekten, welche die Parklücke begrenzen, erfasst und nach Erfülltsein eines auf zumindest eine der Entfernungen bezogenen vorbestimmten Korrekturkriteriums wird die Parkbahn korrigiert.

Das Dokument US2013335553 A1 ist als nächstliegender Stand der Technik nach dem Oberbegriff des Anspruchs 1 zu sehen. Es ist Aufgabe der vorliegenden Erfindung, eine Lösung aufzuzeigen, wie das zumindest semi-autonomes Manövrieren eines Kraftfahrzeugs zuverlässiger und komfortabler erfolgen kann.
Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum zumindest semi-autonomen Manövrieren eines Kraftfahrzeugs. Dabei wird eine relative Lage zwischen dem Kraftfahrzeug und zumindest einem Objekt in einem Umgebungsbereich des Kraftfahrzeugs mittels einer Sensoreinrichtung des Kraftfahrzeugs ermittelt. Zudem wird anhand der ermittelten relativen Lage eine Fahrtrajektorie für eine Fahrt des Kraftfahrzeugs an dem zumindest einen Objekt vorbei bestimmt und ein Kollisionsabstand, welcher einen Abstand zwischen dem Kraftfahrzeug und dem zumindest einen Objekt bei der Fahrt entlang der bestimmten Fahrtrajektorie beschreibt, bestimmt. Des Weiteren wird vor der Fahrt des Kraftfahrzeugs entlang der Fahrtrajektorie ein Unsicherheitsbereich zwischen dem Kraftfahrzeug und dem zumindest einen Objekt bestimmt. Zudem wird vor der Fahrt des Kraftfahrzeugs entlang der Fahrtrajektorie der Kollisionsabstand in Abhängigkeit von dem bestimmten Unsicherheitsbereich angepasst. Schließlich wird die Fahrt des Kraftfahrzeugs entlang der Fahrtrajektorie in Abhängigkeit von dem angepassten Kollisionsabstand gesteuert.

Der vorliegenden Erfindung liegt die Erkenntnis zu Grunde, dass sich bei Verfahren zum zumindest semi-autonomen Manövrieren des Kraftfahrzeugs, die aus dem Stand der Technik bekannt sind, das Problem ergeben kann, dass das Kraftfahrzeug so manövriert wird, dass dies für den Fahrer unkomfortabel ist. Der Grund hierfür ist, dass zur Längsführung des Kraftfahrzeugs üblicherweise eine Fahrtrajektorie bestimmt wird, die sich von einem Startpunkt zu einem Endpunkt erstreckt. Das Fahrerassistenzsystem berechnet das Geschwindigkeitsprofil bis zum dem Endpunkt hierbei beispielsweise so, dass die Geschwindigkeit maximiert wird, aber auch vorbestimmte Werte für die Beschleunigung nicht überschritten werden. Darüber hinaus wird gemäß dem Stand der Technik zur Bestimmung des Geschwindigkeitsprofils ein Kollisionsabstand, also der Abstand zwischen dem Kraftfahrzeug und einem Objekt beim Fahren des Kraftfahrzeugs auf der Fahrtrajektorie berücksichtigt. Der Kollisionsabstand kann auch als Distance to Collision (DTC) bezeichnet werden. Zudem kann ein Endpunkt einer Fahrtrajektorie bestimmt werden. Wenn sich nun während des Fahrens entlang der Fahrtrajektorie der Abstand zu dem Objekt ändert, kann diese dazu führen, dass das Fahrerassistenzsystem die Geschwindigkeit des Kraftfahrzeugs reduziert.

Erfindungsgemäß ist es nun vorgesehen, dass ein Unsicherheitsbereich zwischen dem Kraftfahrzeug und dem zumindest einen Objekt bestimmt wird. Dieser Unsicherheitsbereich beschreibt insbesondere die räumliche Unsicherheit beim Bestimmen der relativen Lage des Kraftfahrzeugs zu dem zumindest einen Objekt. Dieser Unsicherheitsbereich wird vor dem Fahren des Kraftfahrzeugs entlang der Fahrtrajektorie bestimmt. Der Unsicherheitsbereich kann unmittelbar nach dem Erfassen der relativen Lage des Kraftfahrzeugs zu dem Objekt bestimmt bzw. vorgegeben werden. Wenn das zumindest eine Objekt beispielsweise eine Parklücke begrenzt, kann der Unsicherheitsbereich direkt nach einem Vermessen der Parklücke bestimmt werden. Der Unsicherheitsbereich wird also bestimmt bevor das Kraftfahrzeug an dem Objekt vorbei bewegt wird bzw. in die Parklücke bewegt wird. Durch den Unsicherheitsbereich kann eine räumliche Unsicherheit beim Bestimmen der Position und/oder der äußeren Abmessungen des zumindest einen Objekts berücksichtigt werden. Darüber hinaus kann beim dem Bestimmen des Unsicherheitsbereichs eine räumliche Unsicherheit bei einer Bestimmung der Position des Kraftfahrzeugs berücksichtigt werden. Die Position des Kraftfahrzeugs wird beispielsweise mittels Odometrie bestimmt. Hierbei kann ein akkumulierter Fehler bei der Odometrie entstehen, nachdem das Objekt bzw. die Position des Objekts erfasst wurde. Bei dem Bestimmen des Unsicherheitsbereichs kann auch berücksichtigt werden, dass eine räumliche Unsicherheit beim Bestimmen der relativen Lage zwischen dem Kraftfahrzeug und dem Objekt dadurch entstehen kann, dass die Position des Objekts und/oder des Kraftfahrzeugs anhand eines Sensormodells bestimmt wird, welches anschließend in einer Umgebungskarte bearbeitet wird. Der bestimmte Kollisionsabstand zwischen dem Kraftfahrzeug und dem Objekt wird vor der Fahrt des Kraftfahrzeugs entlang der Fahrtrajektorie an den Unsicherheitsbereich angepasst. Des Weiteren wird das Kraftfahrzeug entlang der ermittelten Fahrtrajektorie in Abhängigkeit von dem angepassten Kollisionsabstand manövriert. Auf diese Weise kann die Bewegung des Kraftfahrzeugs in einem Bereich gesteuert werden, in dem mit einer hohen Wahrscheinlichkeit davon ausgegangen werden kann, dass keine Kollision mit dem Objekt auftreten wird. Somit kann auch verhindert werden, dass der Kollisionsabstand zwischen dem Kraftfahrzeug und dem Objekt einen vorbestimmten Mindestwert unterschreitet, was gegebenenfalls dazu führt, dass die Geschwindigkeit bzw. Beschleunigung des Kraftfahrzeugs abrupt reduziert wird. Damit kann ein zumindest semi-autonomes Manövrieren entlang der Fahrtrajektorie ermöglicht werden, das der Fahrer als komfortabel empfindet. Das Verfahren kann insbesondere zum Einparken und/oder zum Rangieren des Kraftfahrzeugs dienen.

Bevorzugt wird der Unsicherheitsbereich anhand eines Typs der Sensoreinrichtung, einer aktuellen Geschwindigkeit des Kraftfahrzeugs beim Ermitteln der relativen Lage zwischen dem Kraftfahrzeug und dem zumindest einen Objekt und/oder anhand der ermittelten relativen Lage zwischen dem Kraftfahrzeug und dem zumindest einen Objekt bestimmt. Die Sensoreinrichtung kann zumindest einen Abstandssensor umfassen, mit dem der Abstand zwischen dem Kraftfahrzeug und dem Objekt erfasst werden kann. Zudem kann die Sensoreinrichtung dazu ausgelegt sein, äußere Abmessungen des zumindest einen Objekts zu bestimmen. Die Sensoreinrichtung kann beispielsweise zumindest einen Ultraschallsensor, zumindest eine Kamera, zumindest einen Radarsensor und/oder zumindest einen Lasersensor umfassen. Je nach Ausgestaltung des Sensors ergeben sich beispielsweise unterschiedliche Messgenauigkeiten bei der Erfassung der Position und/oder der Abmessungen des Objekts. Diese können bei der Bestimmung des Unsicherheitsbereichs berücksichtigt werden. Weiterhin kann die relative Lage und/oder die Relativgeschwindigkeit des Kraftfahrzeugs bezüglich des Objekts beim Erfassen des Objekts berücksichtigt werden. Somit kann der Unsicherheitsbereich besonders zuverlässig bestimmt werden.

In einer Ausführungsform wird die relative Lage zwischen dem Kraftfahrzeug und dem zumindest einen Objekt während der Fahrt des Kraftfahrzeugs entlang der Fahrtrajektorie fortlaufend ermittelt und der Unsicherheitsbereich wird in Abhängigkeit von der ermittelten relativen Lage angepasst. Bei der Fahrt entlang der ermittelten Fahrtrajektorie erhält das Fahrerassistenzsystem üblicherweise genauere Informationen, die das zumindest eine Objekt beschreiben. Beispielsweise können die Position des Objekts und/oder die äußeren Abmessungen des Objekts bei der Annäherung des Kraftfahrzeugs an das Objekt genauer bestimmt werden. Somit kann der Unsicherheitsbereich fortlaufend anhand dieser Informationen angepasst werden.

Bevorzugt wird der Kollisionsabstand zusätzlich anhand von äußeren Abmessungen des Kraftfahrzeugs und einem vorbestimmten Sicherheitsabstand angepasst. Bei der Bestimmung des Kollisionsabstands zwischen dem Kraftfahrzeug und dem zumindest einen Objekt können die äußeren Abmessungen des Kraftfahrzeugs berücksichtigt werden, die beispielsweise in einer Speichereinheit des Fahrerassistenzsystems hinterlegt sind. Bei dem Bestimmen der relativen Lage zwischen dem Kraftfahrzeug und dem Objekt kann zu den äußeren Abmessungen des Kraftfahrzeugs ein Sicherheitsabstand addiert. Auf diese Weise kann zusätzlich zu dem Unsicherheitsbereich der Sicherheitsabstand beim Ermitteln des Kollisionsabstands berücksichtigt werden.

In einer weiteren Ausgestaltung wird ein verbleibender Abstand, welcher eine Entfernung zwischen dem Kraftfahrzeug beim Erreichen des angepassten Kollisionsabstands und einem Endpunkt der ermittelten Fahrtrajektorie beschreibt, ermittelt. Insbesondere stellt der verbleibende Abstand die kürzeste Entfernung zwischen dem Kraftfahrzeug beim Erreichen des Kollisionsabstands und dem Endpunkt der Fahrtrajektorie dar. Dabei wird die Fahrtrajektorie bevorzugt anhand der relative Lage des Objekts zu dem Kraftfahrzeug ermittelt. Bei dem Bestimmen der Fahrtrajektorie wird der Unsicherheitsbereich also nicht berücksichtigt. Der angepasste Kollisionsabstand wird aber anhand des Unsicherheitsbereichs bestimmt. Somit kann der verbleibende Abstand zum Endpunkt derart bestimmt werden, dass keine Kollision mit dem zumindest einen Objekt droht.

Zudem ist es vorteilhaft, wenn ein Geschwindigkeitsprofil für die Fahrt des Kraftfahrzeugs entlang der ermittelten Fahrtrajektorie in Abhängigkeit von dem ermittelten verbleibenden Abstand bestimmt wird. Dadurch, dass der verbleibende Abstand unter Berücksichtigung des Unsicherheitsbereichs und/oder des Sicherheitsabstands ermittelt wird, kann mit hoher Wahrscheinlichkeit davon ausgegangen werden, dass bei der Bewegung des Kraftfahrzeugs entlang der Fahrtrajektorie keine Kollision mit dem Objekt droht. Somit kann das Geschwindigkeitsprofil entlang der Fahrtrajektorie so bestimmt werden, dass die Fahrt von den Fahrzeuginsassen als komfortabel und sicher empfunden wird.

Bevorzugt wird ein Modell, welches die Fahrt des Kraftfahrzeugs entlang der Fahrtrajektorie beschreibt, bestimmt und der Kollisionsabstand wird zusätzlich in Abhängigkeit von dem bestimmten Modell angepasst. Durch ein Modell kann berücksichtigt werden, dass sich das Kraftfahrzeug bei dem zumindest semi-autonomen Manövrieren gegebenenfalls nicht exakt entlang der ermittelten Fahrtrajektorie bewegt. Das Modell kann insbesondere ein dynamisches Modell sein, welches die Bewegung des Kraftfahrzeugs beschreibt. Durch das Modell können somit Abweichungen des Kraftfahrzeugs von der Fahrtrajektorie berücksichtigt und bei der Bestimmung des Kollisionsabstands herangezogen werden. Somit kann die relative Lage des Kraftfahrzeugs beim der Bewegung entlang der Fahrtrajektorie präzise bestimmt werden.

In einer weiteren Ausgestaltung wird eine Position des Kraftfahrzeugs während der Fahrt entlang der ermittelten Fahrtrajektorie bestimmt und der verbleibende Abstand wird anhand der bestimmten Position des Kraftfahrzeugs angepasst. Die Position des Kraftfahrzeugs kann beispielsweise mittels Odometrie bestimmt werden. Zu diesem Zweck kann die Anzahl der Radumdrehungen von zumindest einem Rad des Kraftfahrzeugs und/oder ein Lenkwinkel während der Bewegung des Kraftfahrzeugs entlang der Fahrtrajektorie erfasst werden. Auf diese Weise kann der verbleibende Abstand zuverlässig ermittelt werden.

Zudem ist es vorteilhaft, wenn die Fahrtrajektorie derart bestimmt wird, dass das Kraftfahrzeug bei der Fahrt entlang der Fahrtrajektorie zumindest einen Fahrtrichtungswechsel durchführt, und ein Abstand zu einem Punkt auf der Fahrtrajektorie, an dem der Fahrtrichtungswechsel durchgeführt wird, ermittelt wird. Insbesondere bei Einparkvorgängen kann die Fahrtrajektorie derart bestimmt werden, dass das Kraftfahrzeug bei der Bewegung entlang der Fahrtrajektorie einen Fahrtrichtungswechsel, also einen Wechsel zwischen einer Rückwärtsfahrt zu einer Vorwärtsfahrt oder umgekehrt, durchführt. Durch die Ausgabe des Punkts kann die Bewegung des Kraftfahrzeugs entlang der Fahrtrajektorie genau bestimmt werden.

Bevorzugt wird ein Geschwindigkeitsprofil für die Fahrt des Kraftfahrzeugs entlang der ermittelten Fahrtrajektorie zusätzlich in Abhängigkeit von dem ermittelten Abstand zu dem Punkt bestimmt. Der Abstand des Kraftfahrzeugs zu dem Punkt auf der Fahrtrajektorie, bei dessen Erreichen der Fahrtrichtungswechsel durchführt, wird ausgegeben. Anhand dieses Abstands kann das Geschwindigkeitsprofil des Kraftfahrzeugs von der aktuellen Position zu dem Punkt derart ermittelt werden, dass sich für die Fahrzeuginsassen ein komfortables und sicheres Fahrgefühl ergibt

In einer weiteren Ausführungsform wird zusätzlich ein weiteres Objekt in dem Umgebungsbereich des Kraftfahrzeugs erfasst und es wird überprüft, ob sich eine aktuelle Position des weiteren Objekts innerhalb des Unsicherheitsbereichs befindet. Während der Bewegung des Kraftfahrzeugs können mit der Sensoreinrichtung weitere Objekte erkannt bzw. erfasst werden. Solche weiteren Objekte können beispielsweise Fußgänger sein, die sich zwischen dem Kraftfahrzeug und dem zumindest einen Objekt bewegen. Die weiteren Objekte können auch Objekte sein, die zuvor nicht erfasst wurden. Wenn sich das weitere Objekt nicht innerhalb des Unsicherheitsbereichs befindet, kann die Bewegung des Kraftfahrzeugs angepasst werden. Alternativ oder zusätzlich kann die Fahrtrajektorie angepasst werden. Somit kann das Kraftfahrzeug sicher manövriert werden.

Weiterhin ist es vorteilhaft, wenn zur Steuerung der Fahrt des Kraftfahrzeugs entlang der Fahrtrajektorie in Abhängigkeit von dem angepassten Kollisionsabstand ein Eingriff in eine Lenkung, eine Bremsanlage und/oder einen Antriebseinmotor durchgeführt wird. Zur Bewegung des Kraftfahrzeugs entlang der Fahrtrajektorie kann beispielsweise ein Fahrerassistenzsystem des Kraftfahrzeugs einen Lenkeingriff durchführen. In diesem Fall übernimmt das Fahrerassistenzsystem die Querführung des Kraftfahrzeugs. Der Fahrer betätigt weiterhin das Gaspedal und die Bremse. Es kann auch vorgesehen sein, dass das Fahrerassistenzsystem zusätzlich eine Bremse und/oder einen Antriebsmotor des Kraftfahrzeugs ansteuert, um das Kraftfahrzeug entlang der Fahrtrajektorie zu manövrieren. In diesem Fall übernimmt das Fahrerassistenzsystem auch die Längsführung des Kraftfahrzeugs.

In einer weiteren Ausführungsform wird das Kraftfahrzeug bei der Fahrt entlang der Fahrtrajektorie in eine Parklücke zum Querparken oder in eine Parklücke zum Längsparken bewegt. In diesem Fall begrenzt das zumindest eine Objekt eine Parklücke. Diese Parklücke kann zum Querparken des Kraftfahrzeugs dienen. Alternativ dazu kann die Parklücke zum Längsparken des Kraftfahrzeugs dienen. Somit kann der Fahrer beim Einparken des Kraftfahrzeugs unterstützt werden. Es kann auch vorgesehen sein, dass das Kraftfahrzeug entlang der Fahrtrajektorie zum Ausparken aus einer Parklücke manövriert wird.

Ein erfindungsgemäßes Fahrerassistenzsystem ist dazu ausgebildet, ein erfindungsgemäßes Verfahren durchzuführen. Bevorzugt umfasst das Fahrerassistenzsystem eine Sensoreinrichtung zum Ermitteln einer Position eines Objekts, wobei die Sensoreinrichtung zumindest einen Ultraschallsensor, zumindest eine Kamera, zumindest einen Radarsensor und/oder zumindest einen Lasersensor aufweist. Somit kann mit der Sensoreinrichtung beziehungsweise mit entsprechenden Abstandssensoren die relative Lage zu dem Objekt zuverlässig bestimmt werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

In Bezug auf das erfindungsgemäße Verfahren vorgestellten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen.

Die Erfindung wird nun anhand eines bevorzugten Ausführungsbeispiels sowie unter Bezugnahme auf beigefügten Zeichnungen näher erläutert.
Dabei zeigen:
- Fig. 1: in schematischer Darstellung ein Kraftfahrzeug gemäß einer Ausführungsform der Erfindung;
- Fig. 2: in schematischer Darstellung zwei Objekte in einem Umgebungsbereich des Kraftfahrzeugs und einen jeweiligen Unsicherheitsbereich;
- Fig. 3: eine Bewegung des Kraftfahrzeugs bezüglich der zwei Objekte gemäß Fig. 2;
- Fig. 4: eine Bewegung des Kraftfahrzeugs bezüglich der zwei Objekte gemäß Fig. 2 in einer weiteren Ausführungsform;
- Fig. 5: eine Bewegung des Kraftfahrzeugs bezüglich zweier Objekte, wobei das Kraftfahrzeug einen Fahrtrichtungswechsel durchführt; und
- Fig. 6: das zweite Objekt und weitere Objekte in dem Umgebungsbereich des Kraftfahrzeugs.

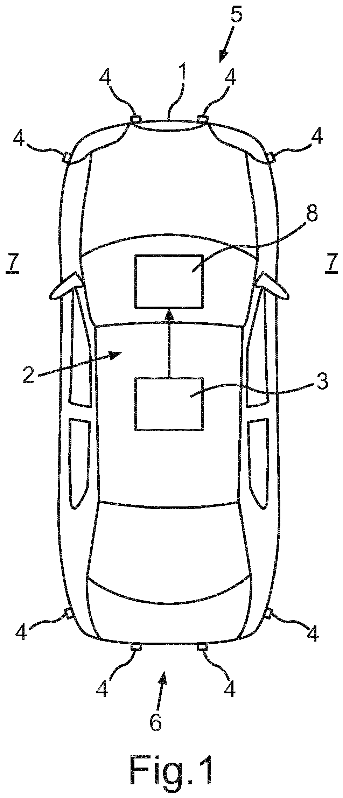

Fig. 1 zeigt ein Kraftfahrzeug gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, die beispielsweise durch ein Steuergerät des Kraftfahrzeugs 1 gebildet sein kann. Des Weiteren umfasst das Fahrerassistenzsystem 2 eine Sensoreinrichtung 9.

In dem vorliegenden Ausführungsbeispiel umfasst die Sensoreinrichtung 9 acht Abstandssensoren 4. Dabei sind vier Abstandssensoren 4 in einem Frontbereich 5 des Kraftfahrzeugs 1 und vier Abstandssensoren 4 in einem Heckbereich 6 des Kraftfahrzeugs 1 angeordnet. Die Abstandssensoren 4 sind insbesondere dazu ausgebildet, ein Objekt 12 in einem Umgebungsbereich 7 des Kraftfahrzeugs 1 zu erfassen. Des Weiteren sind die Abstandssensoren 4 dazu ausgelegt, einen Abstand zu zumindest einem Objekt 10, 11 in dem Umgebungsbereich 7 des Kraftfahrzeugs 1 zu bestimmen. Die Abstandssensoren 4 können beispielsweise als Ultraschallsensoren, Radarsensoren, Laserscanner, Kameras oder dergleichen ausgebildet sein. Weiterhin kann es auch vorgesehen sein, dass weitere Abstandssensoren beispielsweise an einem äußeren Seitenbereich des Kraftfahrzeugs 1 angeordnet sind.

Darüber hinaus umfasst das Kraftfahrzeug 1 eine Antriebseinrichtung 8. Die Antriebseinrichtung 8 kann zur Ansteuerung eines Antriebsstrangs des Kraftfahrzeugs 1 dienen. Insbesondere kann mit der Antriebseinrichtung 8 ein Antriebsmotor und/oder eine Bremsanlage des Kraftfahrzeugs 1 angesteuert werden. Weiterhin kann es vorgesehen sein, dass mittels der Antriebseinrichtung 8 eine Lenkung des Kraftfahrzeugs 1 ansteuert wird. Die Steuereinrichtung 3 ist mit den Abstandssensoren 4 zur Datenübertragung verbunden. Entsprechende Datenleitungen sind vorliegend der Übersichtlichkeit halber nicht dargestellt. Darüber hinaus ist die Steuereinrichtung 3 mit der Antriebseinrichtung 8 zur Datenübertragung verbunden.

Mit den Abstandssensoren 4 kann zumindest ein Objekt 10, 11 in der Umgebung 7 des Kraftfahrzeugs 1 erfasst werden. Zudem kann der Abstand zu dem Objekt 10, 11 bestimmt werden. Zu diesem Zweck kann beispielsweise ein Signal mit zumindest einem der Abstandssensoren 4 ausgesendet werden und das von dem Objekt reflektierte Signal wieder empfangen werden. Anhand der Laufzeit des Signals kann der Abstand zu dem Objekt 10, 11 mittels der Steuereinrichtung 3 bestimmt werden. Das Fahrerassistenzsystem 2 kann zudem die aktuelle Position des Kraftfahrzeugs 1 ermitteln. Hierzu können die Signale eines satellitengestützten Positionsbestimmungssystems berücksichtigt werden. Des Weiteren kann die aktuelle Position des Kraftfahrzeugs 1 mittels Odometrie bestimmt werden. Zu diesem Zweck können beispielsweise die Radumdrehungen zumindest eines Rads des Kraftfahrzeugs 1 und/oder ein Lenkwinkel des Kraftfahrzeugs ermittelt werden. Anhand der aktuellen Position des Kraftfahrzeugs 1 und des Abstands zwischen dem Kraftfahrzeug 1 und dem Objekt 10, 11 kann die relative Lage des Kraftfahrzeugs 1 bezüglich des Objekts 10, 11 ermittelt werden.

Darüber hinaus ist die Steuereinrichtung 3 dazu ausgebildet, eine Fahrtrajektorie 12 des Kraftfahrzeugs 1 zu berechnen, welche eine kollisionsfreie Bewegung des Kraftfahrzeugs 1 an dem Objekt 10, 11 vorbei beschreibt. Hierzu können auch die äußeren Abmessungen des Kraftfahrzeugs 1 berücksichtigt werden, wie beispielsweise in einer Speichereinheit der Steuereinrichtung 3 hinterlegt sind. Mittels des Fahrerassistenzsystems 2 kann das Kraftfahrzeug 1 semi-autonom entlang der Fahrtrajektorie 12 bewegt werden. In diesem Fall wird die Lenkung von dem Fahrerassistenzsystem 2 übernommen. Der Fahrer betätigt weiterhin das Gaspedal und die Bremse. Alternativ dazu kann das Kraftfahrzeug 1 auch autonom entlang der Fahrtrajektorie 12 bewegt werden. Hierbei steuert das Fahrerassistenzsystem 2 auch den Antrieb und die Bremse des Kraftfahrzeugs 1.

Das Fahrerassistenzsystem 2 bzw. die Steuereinrichtung 3 ist zudem dazu ausgelegt, ein Geschwindigkeitsprofil für die Fahrt entlang der Fahrtrajektorie 12, also von einem Startpunkt zu einem Endpunkt der Fahrtrajektorie 12 zu bestimmen. Wenn das Kraftfahrzeug 1 entlang der Fahrtrajektorie12 bewegt wird, kann sich das Kraftfahrzeug 1 dem zumindest einen Objekt 10, 11 nähern. In diesem Fall kann ein Kollisionsabstand zwischen dem Kraftfahrzeug 1 und dem Objekt 10, 11 einen Schwellenwert unterschreiten. Der Kollisionsabstand beschreibt die Entfernung zwischen dem Bereich des Kraftfahrzeugs 1 mit dem eine Kollision mit dem Objekt 10, 11 bei Fahrt entlang der Fahrtrajektorie 12 droht und dem zumindest einen Objekt 10, 11. Wenn der Schwellenwert für den Kollisionsabstand unterschritten wird, kann die Geschwindigkeit des Kraftfahrzeugs 1 von dem Fahrerassistenzsystem 2 automatisch reduziert werden. Dies kann zur Folge haben, dass der Fahrer die Fahrt entlang der Fahrtrajektorie 12 als unkomfortabel oder unsicher empfindet.

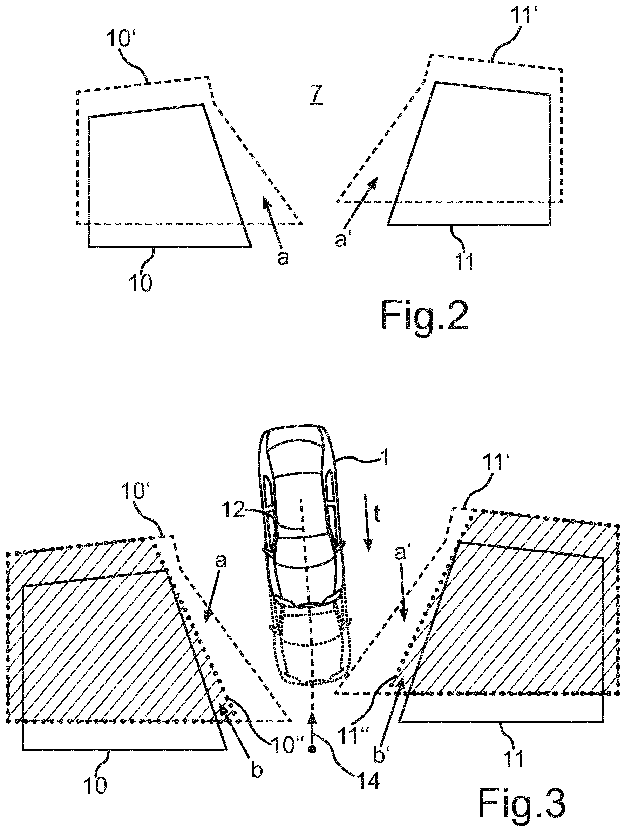

Fig. 2 zeigt ein erstes Objekt 10 und ein zweites Objekt 11, die sich in dem Umgebungsbereich 7 des Kraftfahrzeugs 1 befinden in einer Draufsicht. Die beiden Objekte 10, 11 können beispielsweise eine Parklücke begrenzen. Die äußeren Abmessungen der Objekte 10, 11 sind mittels der Steuereinrichtung 3 anhand der Sensordaten der Abstandssensoren 4 bestimmt. Bei Erfassen der Objekte 10, 11 mit den Abstandssensoren 4 ergeben sich üblicherweise Messungenauigkeiten. Diese können durch den Typ des Abstandssensors 4 bzw. das Messprinzip begründet sein. Weiterhin kann die Position des Kraftfahrzeugs 1 zu den Objekten 10, 11 beim Erfassen der Objekte 10, 11 und/oder die aktuelle Geschwindigkeit des Kraftfahrzeugs 1 beim Erfassen der Objekte 10, 11 eine Rolle spielen. Diese Einflussfaktoren werden dadurch berücksichtigt, dass ein jeweiliger Unsicherheitsbereich a, a' zwischen dem Kraftfahrzeug 1 und den Objekten 10, 11 berücksichtigt wird. Der Unsicherheitsbereich a bzw. a' kann die Objekte 10, 11 quasi umgeben. Durch den Unsicherheitsbereich a bezüglich des ersten Objekts 10 ergibt sich ein erstes Sicherheitsobjekt 10'. Durch den Unsicherheitsbereich a' bezüglich des zweiten Objekts 11 ergibt sich ein zweites Sicherheitsobjekt 11'. Der Unsicherheitsbereich a wird bestimmt, bevor das Kraftfahrzeug 1 entlang der Fahrtrajektorie 12 manövriert wird. Anhand des Unsicherheitsbereichs a, a' bzw. anhand der Sicherheitsobjekte 10' und 11' wird der Kollisionsabstand angepasst. Anhand des angepassten Kollisionsabstands kann dann die Fahrtrajektorie 12 bestimmt werden, entlang der das Kraftfahrzeugs 1 an den Objekten 10, 11 vorbei bewegt wird.

Zudem kann es gemäß einer weiteren Ausführungsform vorgesehen sein, dass die Unsicherheitsbereiche a, a' bzw. die Sicherheitsobjekte 10', 11' während der Fahrt des Kraftfahrzeugs 1 entlang der Fahrtrajektorie 12 angepasst werden. Dies ist in Fig. 3 verdeutlicht. Wenn sich das Kraftfahrzeug 1 in Abhängigkeit von der Zeit t auf die Objekte 10, 11 zu bewegt, können die Objekte 10, 11 mittels der Abstandssensoren 4 genauer erfasst werden. Dadurch wird es möglich, die die Unsicherheitsbereiche a, a' bzw. die Sicherheitsobjekte 10', 11' entsprechend anzupassen. Somit ergeben sich die angepassten Unsicherheitsbereiche und b' bzw. die angepassten Sicherheitsobjekte 10" und 11". Die die angepassten Sicherheitsobjekte 10" und 11" sind in Fig. 3 schraffiert dargestellt. Es ist zu erkennen, dass die angepassten Sicherheitsobjekte 10" und 11" im Vergleich zu den Sicherheitsobjekten 10' und 11' eine geringere räumliche Erstreckung in dem von dem Kraftfahrzeug 1 abgewanden Bereich zwischen den beiden Objekten 10 und 11 aufweist. Der Grund hierfür ist, dass dieser Bereich erst bei der Annäherung des Kraftfahrzeugs 1 an die Objekten 10, 11 genauer erfasst werden kann und somit auch der angepasste Unsicherheitsbereich b bzw. b" im Vergleich zu den Unsicherheitsbereichen a, a' geringer gewählt werden kann.

Das Fahrerassistenzsystem 2 kann bestimmen, ob eine Kollision mit einem der Objekte 10, 11 droht. Dazu kann das Fahrerassistenzsystem 2 den Kollisionsabstand bestimmen. Bei der Berechnung des Kollisionsabstands werden die jeweilige Unsicherheitsbereiche a, a' bzw. die angepassten Unsicherheitsbereiche b, b' berücksichtigt. Somit kann das Fahrerassistenzsystem 2 zudem einen verbleibenden Abstand 14 ermitteln, der einen Bereich darstellt, in dem mit hoher Wahrscheinlichkeit keine Kollision zwischen dem Kraftfahrzeug 1 und einem der Objekte 10, 11 erfolgt. Der verbleibende Abstand 14 stellt insbesondere den kürzesten Abstand zwischen der Position des Kraftfahrzeugs 1 beim Erreichen des minimalen Kollisionsabstands und dem Endpunkt der Fahrtrajektorie 12 dar. Der verbleibende Abstand 14 wird also in Abhängigkeit von den Unsicherheitsbereichen a, a' bzw. den angepassten Unsicherheitsbereichen b, b' ermittelt. Die Fahrtrajektorie 12 wird aber anhand der Objekte 10, 11 ermittelt.

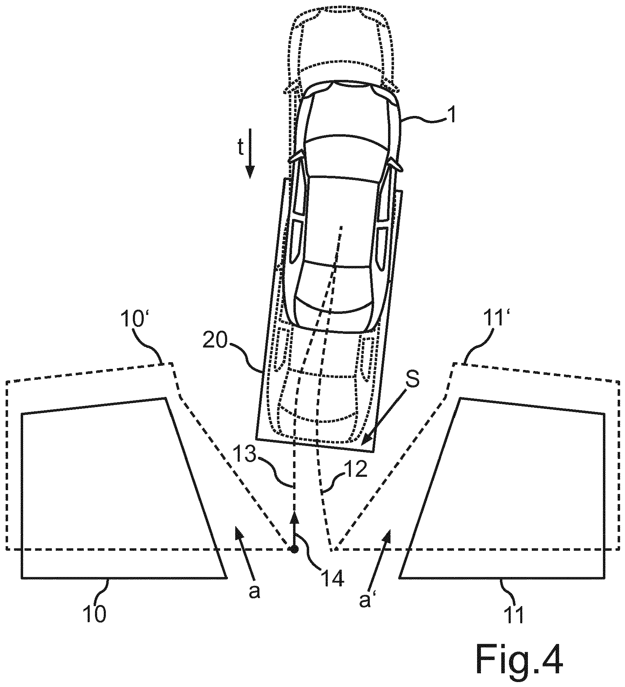

Fig. 4 zeigt ein weiteres Ausführungsbeispiel. In diesem Fall wird das Kraftfahrzeug 1 rückwärts zwischen den beiden Objekten 10, 11 bewegt. In diesem Fall wird zusätzlich zu den äußeren Abmessungen des Kraftfahrzeugs 1 ein Sicherheitsabstand S berücksichtigt. Hier ist der Sicherheitsabstand S derart gewählt, dass das Kraftfahrzeug 1 als Rechteck 20 betrachtet wird. Der Sicherheitsabstand S wird hierbei zusätzlich zu den Unsicherheitsbereichen a, a' bei der Berechnung des Kollisionsabstands und/oder des verbleibenden Abstands 14 berücksichtigt.

Der verbleibende Abstand 14 wird in Abhängigkeit von der Fahrtrajektorie 12 bestimmt. Bei der Bewegung des Kraftfahrzeugs 1 entlang der Fahrtrajektorie 12 können Abweichungen auftreten. Diese können beispielsweise dadurch entstehen, dass die Lenkung des Kraftfahrzeugs 1 nicht dem durch das Fahrerassistenzsystem 2 vorgegebenen Lenkwinkel folgt. Um diese Abweichung zu berücksichtigen, kann ein dynamisches Modell des Kraftfahrzeugs 1 verwendet werden. Hierbei kann es auch vorgesehen sein, dass der verbleibende Abstand 14 dadurch berechnet wird, dass die Fahrtrajektorie 12 auf die aktuell ermittelte Position des Kraftfahrzeugs 1, die beispielsweise mittels Odometrie bestimmt wird, projiziert wird. Somit ergibt sich die projizierte bzw. angepasste Fahrtrajektorie 13, anhand der der verbleibende Abstand 14 bestimmt wird.

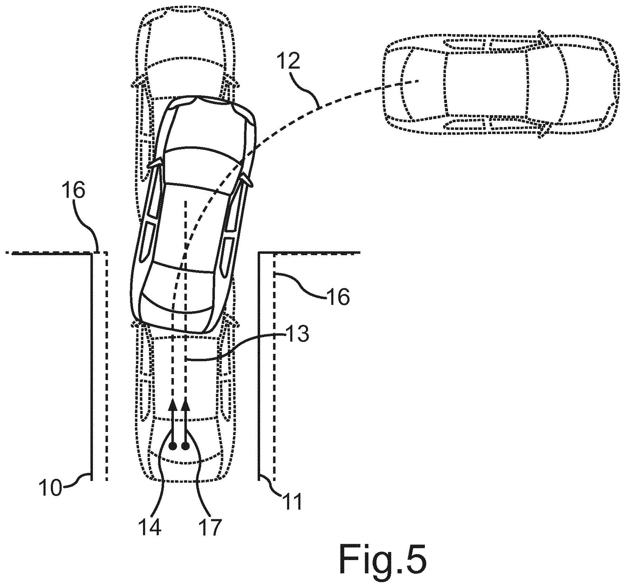

Fig. 5 zeigt ein weiteres Ausführungsbeispiel, bei welchen das Kraftfahrzeug 1 rückwärts zwischen den beiden Objekten 10, 11 bewegt wird. Die beiden Objekte 10, 11 können beispielsweise ein Parklücke begrenzen. In diesem Fall ist die Fahrtrajektorie 12 derart bestimmt, dass das Kraftfahrzeug 1 bei der Fahrt entlang der Fahrtrajektorie 12 eine Fahrtrichtungsänderung durchführt. Zudem wird die Lage der beiden Objekte 10, 11 korrigiert, so dass sich die angepassten Begrenzungslinien 16 ergeben. Bei der Neuvermessung der Objekte 10, 11 kann sich das Problem ergeben, dass die Fahrt entlang der ursprünglich geplanten Fahrtrajektorie 12 nun zu zwar zu keiner Kollision mit einem der Objekte 10, 11 führen würde, aber die Zielposition bei der Fahrt entlang der Fahrtrajektorie 12 nicht erreicht werden kann. In diesem Fall bedarf es einer Änderung der Fahrtrajektorie 12.

In dem Ausführungsbeispiel gemäß Fig. 5 kann es zudem der Fall sein, dass das Fahrerassistenzsystem 2 den Fahrtrichtungswechsel früher als geplant durchführt, um die Dauer des Fahrmanövers zu reduzieren. Dies kann auch erfolgen, wenn die weitere Fahrt entlang der Fahrtrajektorie 12 kollisionsfrei ist. In diesem Fall kann von dem Fahrerassistenzsystem 2 der Abstand zwischen der aktuellen Position des Kraftfahrzeugs 1 und dem Punkt auf der Fahrtrajektorie 12, bei welchem die Fahrtrichtungsänderung erfolgt, ausgegeben werden. Hier kann die Antriebseinrichtung des Kraftfahrzeugs 1 von dem Fahrerassistenzsystem 2 derart angesteuert werden, dass das Kraftfahrzeug 1 bis zu dem Punkt oder weiter entlang der Fahrtrajektorie 12 bewegt wird, falls keine Kollisionsgefahr besteht. Das Kraftfahrzeug 1 sollte so früh wie möglich aber komfortabel gestoppt werden. Das Kraftfahrzeug 1 kann auf der angepassten Fahrtrajektorie 13 bewegt werden. In dem vorliegenden Beispiel ist der verbleibende Abstand 14 auf der Fahrtrajektorie und der verbleibende Abstand 17 auf der angepassten Fahrtrajektorie 13 gleich.

Während der Fahrt des Kraftfahrzeugs 1 entlang der Fahrtrajektorie 12 kann es vorkommen, dass weitere Objekte in dem Umgebungsbereich 7 des Kraftfahrzeugs 1 mit den Abstandssensoren 4 erfasst werden. Dies kann beispielsweise der Fall sein, wenn sich Fußgänger oder andere Verkehrsteilnehmer zwischen dem Kraftfahrzeug 1 und dem ersten Objekt 10 und/oder dem zweiten Objekt 11 befinden. Es kann auch vorkommen, dass weiteren Objekte erst zu einem späteren Zeitpunkt erfasst werden.

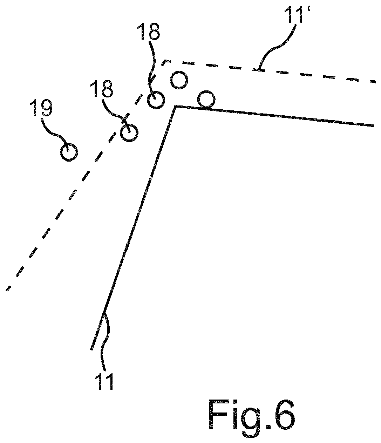

Diese weitern Objekte können entsprechenden Merkmalen zugeordnet werden. Dies ist schematisch in Fig. 6 am Beispiel des zweiten Objekts 11 verdeutlicht. Dabei wird zwischen weiteren Objekten, die sich innerhalb des Unsicherheitsbereichs a' und weiteren Objekten, die sich außerhalb des Unsicherheitsbereichs a' befinden, unterschieden. Die weiteren Objekte, die sich innerhalb des Unsicherheitsbereichs a' befinden, werden zu den Merkmalen 18 gruppiert. Die weiteren Objekte, die sich außerhalb des Unsicherheitsbereichs a' befinden, werden zu den Merkmalen 19 gruppiert. Dabei kann es auch vorgesehen sein, dass ein Kollisionsabstand zu den weiteren Objekten ermittelt wird. Wenn sich zumindest ein weiteres Objekt außerhalb des Unsicherheitsbereichs a' befindet, kann zudem der Kollisionsabstand zu dem weiteren Objekt beim Ermitteln des Geschwindigkeitsprofils berücksichtigt werden.

Bei den oben beschriebenen Ausführungsbeispielen kann die Antriebseinrichtung 8 den Antriebsstrang derart ansteuern, dass das Minimum des verbleibenden Abstands 14 verwendet wird, um das Geschwindigkeitsprofil entlang der Fahrtrajektorie 12 zu ermitteln. Wenn sich zwischen einem der Objekte 10, 11 und dem Kraftfahrzeug 1 keine weiteren Objekte befinden kann das Fahrerassistenzsystem 2 den verbleibenden Kollisionsabstand zur Bestimmung des Geschwindigkeitsprofils nutzen. Bei der Fahrt entlang der Fahrtrajektorie 12 wird der Kollisionsabstand keine kleineren Werte erreichen, da bei der Bestimmung des Kollisionsabstands der Unsicherheitsbereich a, a' und/oder der Sicherheitsabstand S berücksichtigt wurde. Auf diese Weise kann das Kraftfahrzeug 1 entlang der Fahrtrajektorie 12 derart manövriert werden, dass dies die Fahrzeuginsassen als komfortabel und sicher empfinden.

## Patentansprüche

1. Verfahren zum zumindest semi-autonomen Manövrieren eines Kraftfahrzeugs (1), bei welchem eine relative Lage zwischen dem Kraftfahrzeug (1) und zumindest einem Objekt (10, 11) in einem Umgebungsbereich (7) des Kraftfahrzeugs (1) mittels einer Sensoreinrichtung (9) des Kraftfahrzeugs (1) ermittelt wird, anhand der ermittelten relativen Lage eine Fahrtrajektorie (12) für eine Fahrt des Kraftfahrzeugs (1) an dem zumindest einen Objekt (10, 11) vorbei bestimmt wird und ein Kollisionsabstand, welcher einen Abstand zwischen dem Kraftfahrzeug (1) und dem zumindest einen Objekt (10, 11) bei der Fahrt entlang der bestimmten Fahrtrajektorie (12) beschreibt, bestimmt wird,
**dadurch gekennzeichnet, dass**
vor der Fahrt des Kraftfahrzeugs (1) entlang der Fahrtrajektorie (12) ein Unsicherheitsbereich (a, a') zwischen dem Kraftfahrzeug (1) und dem zumindest einen Objekt (10, 11) bestimmt wird sowie der Kollisionsabstand in Abhängigkeit von dem bestimmten Unsicherheitsbereich (a, a') angepasst wird und die Fahrt des Kraftfahrzeug (1) entlang der Fahrtrajektorie (12) in Abhängigkeit von dem angepassten Kollisionsabstand gesteuert wird.

2. Verfahren nach Anspruch 1,
**dadurch gekennzeichnet, dass**
der Unsicherheitsbereich (a, a') anhand eines Typs der Sensoreinrichtung (9), einer aktuellen Geschwindigkeit des Kraftfahrzeugs (1) beim Ermitteln der relativen Lage zwischen dem Kraftfahrzeug (1) und dem zumindest einen Objekt (10, 11) und/oder anhand der ermittelten relativen Lage zwischen dem Kraftfahrzeug (1) und dem zumindest einen Objekt (10, 11) bestimmt wird.

3. Verfahren nach Anspruch 1 oder 2,
**dadurch gekennzeichnet, dass**
die relative Lage zwischen dem Kraftfahrzeug (1) und dem zumindest einen Objekt (10, 11) während der Fahrt des Kraftfahrzeugs (1) entlang der Fahrtrajektorie (12) fortlaufend ermittelt wird und der Unsicherheitsbereich (a, a') in Abhängigkeit von der ermittelten relativen Lage angepasst wird.

4. Verfahren nach einem der vorhergehenden Ansprüche,
**dadurch gekennzeichnet, dass**
der Kollisionsabstand zusätzlich anhand von äußeren Abmessungen des Kraftfahrzeugs (1) und einem vorbestimmten Sicherheitsabstand (S) angepasst wird.

5. Verfahren nach einem der vorhergehenden Ansprüche,
**dadurch gekennzeichnet, dass**
ein verbleibender Abstand (14), welcher eine Entfernung zwischen dem Kraftfahrzeugs (1) beim Erreichen des angepassten Kollisionsabstands und einem Endpunkt der ermittelten Fahrtrajektorie (12) beschreibt, ermittelt wird.

6. Verfahren nach Anspruch 5,
**dadurch gekennzeichnet, dass**
ein Geschwindigkeitsprofil für die Fahrt des Kraftfahrzeugs (1) entlang der ermittelten Fahrtrajektorie (12) in Abhängigkeit von dem ermittelten verbleibenden Abstand (14) bestimmt wird.

7. Verfahren nach einem der vorhergehenden Ansprüche,
**dadurch gekennzeichnet, dass**
ein Modell, welches die Fahrt des Kraftfahrzeugs (1) entlang der Fahrtrajektorie (12) beschreibt, bestimmt wird und der Kollisionsabstand zusätzlich in Abhängigkeit von dem bestimmten Modell angepasst wird.

8. Verfahren nach einem der Ansprüche 5 bis 7,
**dadurch gekennzeichnet, dass**
eine aktuelle Position des Kraftfahrzeugs (1) während der Fahrt entlang der ermittelten Fahrtrajektorie (12) bestimmt wird und der verbleibende Abstand (14) anhand der bestimmten Position des Kraftfahrzeugs (1) angepasst wird.

9. Verfahren nach einem der vorhergehenden Ansprüche,
**dadurch gekennzeichnet, dass**
die Fahrtrajektorie (12) derart ermittelt wird, dass das Kraftfahrzeug (1) bei der Fahrt entlang der Fahrtrajektorie (12) zumindest einen Fahrtrichtungswechsel durchführt, und ein Abstand zu einem Punkt auf der Fahrtrajektorie (12), an dem der Fahrtrichtungswechsel durchgeführt wird, ermittelt wird.

10. Verfahren nach Anspruch 9,
**dadurch gekennzeichnet, dass**
ein Geschwindigkeitsprofil für die Fahrt des Kraftfahrzeugs (12) entlang der ermittelten Fahrtrajektorie (12) zusätzlich in Abhängigkeit von dem ermittelten Abstand zu dem Punkt, an dem der Fahrtrichtungswechsel durchgeführt wird, bestimmt wird.

11. Verfahren nach einem der vorhergehenden Ansprüche,
**dadurch gekennzeichnet, dass**
zusätzlich ein weiteres Objekt in dem Umgebungsbereich (7) des Kraftfahrzeugs (1) erfasst wird und überprüft wird, ob sich eine aktuelle Position des weiteren Objekts innerhalb des Unsicherheitsbereichs (a, a') befindet.

12. Verfahren nach einem der vorhergehenden Ansprüche,
**dadurch gekennzeichnet, dass**
zur Steuerung der Fahrt des Kraftfahrzeugs (1) entlang der Fahrtrajektorie (12) in Abhängigkeit von dem angepassten Kollisionsabstand ein Eingriff in eine Lenkung, eine Bremsanlage und/oder einen Antriebsmotor des Kraftfahrzeugs (1) durchgeführt wird.

13. Verfahren nach einem der vorhergehenden Ansprüche,
**dadurch gekennzeichnet, dass**
das Kraftfahrzeug (1) bei der Fahrt entlang der Fahrtrajektorie (12) in eine Parklücke zum Querparken oder in eine Parklücke zum Längsparken bewegt wird.

14. Fahrerassistenzsystem (2), welches zum Durchführen eines Verfahrens nach einem der vorhergehenden Ansprüche ausgebildet ist.

15. Kraftfahrzeug (1) mit einem Fahrerassistenzsystem (2) nach Anspruch 14.

## Claims

1. Method for the at least semi-autonomous manoeuvring of a motor vehicle (1), in which a relative position between the motor vehicle (1) and at least one object (10, 11) in a surrounding area (7) of the motor vehicle (1) is detected by means of a sensor device (9) of the motor vehicle (1), a travel trajectory (12) for travel of the motor vehicle (1) past the at least one object (10, 11) is determined on the basis of the detected relative position, and a collision distance, which describes a distance between the motor vehicle (1) and the at least one object (10, 11) during the travel along the determined travel trajectory (12), is determined,
**characterized in that**
before the travel of the motor vehicle (1) along the travel trajectory (12), an uncertainty area (a, a') is determined between the motor vehicle (1) and the at least one object (10, 11), and the collision distance is adjusted as a function of the determined uncertainty area (a, a'), and the travel of the motor vehicle (1) along the travel trajectory (12) is controlled as a function of the adjusted collision distance.

2. Method according to Claim 1,
**characterized in that**
the uncertainty area (a, a') is determined on the basis of the type of the sensor device (9), a current speed of the motor vehicle (1) during the detection of the relative position between the motor vehicle (1) and the at least one object (10, 11) and/or on the basis of the detected relative position between the motor vehicle (1) and the at least one object (10, 11).

3. Method according to Claim 1 or 2,
**characterized in that**
the relative position between the motor vehicle (1) and the at least one object (10, 11) is detected continuously during the travel of the motor vehicle (1) along the travel trajectory (12), and the uncertainty area (a, a') is adjusted as a function of the detected relative position.

4. Method according to one of the preceding claims,
**characterized in that**
the collision distance is additionally adjusted on the basis of external dimensions of the motor vehicle (1) and a predetermined safety distance (S) .

5. Method according to one of the preceding claims,
**characterized in that**
a remaining distance (14), which describes a distance between the motor vehicle (1) when the adjusted collision distance is reached and an end point of the detected travel trajectory (12), is detected.

6. Method according to Claim 5,
**characterized in that**
a speed profile for the travel of the motor vehicle (1) along the detected travel trajectory (12) is determined as a function of the detected remaining distance (14).

7. Method according to one of the preceding claims,
**characterized in that**
a model, which describes the travel of the motor vehicle (1) along the travel trajectory (12), is determined, and the collision distance is additionally adjusted as a function of the determined model.

8. Method according to one of Claims 5 to 7,
**characterized in that**
a current position of the motor vehicle (1) during the travel along the detected travel trajectory (12) is determined, and the remaining distance (14) is adjusted on the basis of the determined position of the motor vehicle (1).

9. Method according to one of the preceding claims,
**characterized in that**
the travel trajectory (12) is detected in such a way that during the travel along the travel trajectory (12) the motor vehicle (1) carries out at least one change of direction of travel, and a distance from a point on the travel trajectory (12) at which the change of direction of travel is carried out is detected.

10. Method according to Claim 9,
**characterized in that**
a speed profile for the travel of the motor vehicle (12) along the detected travel trajectory (12) is additionally determined as a function of the detected distance from the point at which the change of direction of travel is carried out.

11. Method according to one of the preceding claims,
**characterized in that**
a further object is additionally sensed in the surrounding area (7) of the motor vehicle (1) and it is checked whether a current position of the further object is located within the uncertainty area (a, a').

12. Method according to one of the preceding claims, **characterized in that**
in order to control the travel of the motor vehicle (1) along the travel trajectory (12) as a function of the adjusted collision distance, an intervention is made into a steering system, a brake system and/or a drive engine of the motor vehicle (1).

13. Method according to one of the preceding claims,
**characterized in that**
during the travel along the travel trajectory (12) the motor vehicle (1) is moved into a parking space for the purpose of lateral parking or into a parking space for the purpose of longitudinal parking.

14. Driver assistance system (2) which is designed to carry out a method according to one of the preceding claims.

15. Motor vehicle (1) having a driver assistance system (2) according to Claim 14.

## Revendications

1. Procédé servant à manoeuvrer au moins de manière semi-autonome un véhicule à moteur (1), dans lequel une position relative entre le véhicule à moteur (1) et au moins un objet (10, 11) est déterminée dans une zone environnante (7) du véhicule à moteur (1) au moyen d'un dispositif capteur (9) du véhicule à moteur (1), une trajectoire de circulation (12) pour une circulation du véhicule à moteur (1) passant devant l'objet ou les objets (10, 11) est déterminée sur la base de la position relative définie et une distance de collision, qui décrit une distance entre le véhicule à moteur (1) et l'objet ou les objets (10, 11) lors de la circulation le long de la trajectoire de circulation (12) définie, est déterminée,
**caractérisé en ce qu'**une zone d'insécurité (a, a') entre le véhicule à moteur (1) et l'objet ou les objets (10, 11) est définie avant la circulation du véhicule à moteur (1) le long de la trajectoire de circulation (12), **en ce que** la distance de collision est adaptée en fonction de la zone d'insécurité (a, a') définie et **en ce que** la circulation du véhicule à moteur (1) le long de la trajectoire de circulation (12) est commandée en fonction de la distance de collision adaptée.

2. Procédé selon la revendication 1,
**caractérisé en ce que** la zone d'insécurité (a, a') est déterminée sur la base d'un type du dispositif capteur (9), d'une vitesse actuelle du véhicule à moteur (1) lors de la détermination de la position relative entre le véhicule à moteur (1) et l'objet ou les objets (10, 11) et/ou sur la base de la position relative déterminée entre le véhicule à moteur (1) et l'objet ou les objets (10, 11).

3. Procédé selon la revendication 1 ou 2,
**caractérisé en ce que** la position relative entre le véhicule à moteur (1) et l'objet ou les objets (10, 11) est déterminée en continu pendant la circulation du véhicule à moteur (1) le long de la trajectoire de circulation (12) et **en ce que** la zone d'insécurité (a, a') est adaptée en fonction de la position relative déterminée.

4. Procédé selon l'une des revendications précédentes,
**caractérisé en ce que** la distance de collision est en outre adaptée en fonction des dimensions extérieures du véhicule à moteur (1) et d'une distance de sécurité (S) prédéfinie.

5. Procédé selon l'une des revendications précédentes,
**caractérisé en ce qu'**on détermine une distance restante (14) qui décrit une distance entre le véhicule à moteur (1), lorsque la distance de collision adaptée est atteinte, et un point final de la trajectoire de circulation (12) déterminée.

6. Procédé selon la revendication 5,
**caractérisé en ce qu'**un profil de vitesse pour la circulation du véhicule à moteur (1) le long de la trajectoire de circulation (12) déterminée est défini en fonction de la distance restante (14) déterminée.

7. Procédé selon l'une des revendications précédentes,
**caractérisé en ce qu'**un modèle qui décrit la circulation du véhicule à moteur (1) le long de la trajectoire de circulation (12) est défini et **en ce que** la distance de collision est en outre adaptée en fonction du modèle défini.

8. Procédé selon l'une des revendications 5 à 7,
**caractérisé en ce qu'**une position actuelle du véhicule à moteur (1) est définie pendant la circulation le long de la trajectoire de circulation (12) déterminée et **en ce que** la distance restante (14) est adaptée en fonction de la position définie du véhicule à moteur (1) .

9. Procédé selon l'une des revendications précédentes,
**caractérisé en ce que** la trajectoire de conduite (12) est déterminée de telle sorte que le véhicule à moteur (1) effectue au moins un changement de direction de circulation le long de la trajectoire de circulation (12), et **en ce qu'**une distance par rapport à un point de la trajectoire de circulation (12) où s'effectue le changement de direction de circulation est déterminée.

10. Procédé selon la revendication 9,
**caractérisé en ce qu'**un profil de vitesse pour la circulation du véhicule à moteur (12) le long de la trajectoire de circulation (12) déterminée est en outre défini en fonction de la distance déterminée par rapport au point où s'effectue le changement de direction de circulation.

11. Procédé selon l'une des revendications précédentes,
**caractérisé en ce qu'**un autre objet est en outre détecté dans la zone environnante (7) du véhicule à moteur (1) et **en ce qu'**il est vérifié si une position actuelle de l'autre objet se trouve dans la zone d'insécurité (a, a').

12. Procédé selon l'une des revendications précédentes,
**caractérisé en ce qu'**une intervention est effectuée sur un système de direction, un système de freinage et/ou un moteur d'entraînement du véhicule à moteur (1) en fonction de la distance de collision adaptée pour commander la circulation du véhicule à moteur (1) le long de la trajectoire de circulation (12).

13. Procédé selon l'une des revendications précédentes,
**caractérisé en ce que** le véhicule à moteur (1) est déplacé dans un emplacement de stationnement pour stationnement transversal ou dans un emplacement de stationnement pour stationnement longitudinal pendant la circulation le long de la trajectoire de circulation (12) .

14. Système d'aide à la conduite (2) conçu pour mettre en oeuvre un procédé selon l'une des revendications précédentes.

15. Véhicule à moteur (1) comportant un système d'aide à la conduite (2) selon la revendication 14.
